# FASCICULE DE BREVET EUROPEEN

(11) **EP 2 528 876 B1**
(45) Date de publication et mention de la délivrance du brevet: **14.12.2016**
(21) Numéro de dépôt: 11702171.7
(22) Date de dépôt: 28.01.2011
(51) Int. Cl.: C04B 26/22, C08G 63/48, C08L 67/08, C08L 93/00, C08L 95/00, C09D 167/08, C04B 26/18, C04B 111/00

(54) **LIANT SYNTHETIQUE ESSENTIELLEMENT A BASE DE MATIERES ISSUES DE RESSOURCES RENOUVELABLES, EN PARTICULIER D'ORIGINE VEGETALE, ET SES APPLICATIONS EN TECHNIQUE ROUTIERE**
SYNTHETISCHE BINDEMITTEL, IM WESENTLICHEN BASIEREND AUF MATERIALIEN AUS NACHWACHSENDEN ROHSTOFFEN, INSBESONDERE PFLANZLICHEN URSPRUNGS, SOWIE SEINE ANWENDUNGEN IM STRASSENBAU
SYNTHETIC BINDER ESSENTIALLY BASED ON MATERIALS DERIVED FROM RENEWABLE RESOURCES, ESPECIALLY OF PLANT ORIGIN, AND ITS APPLICATIONS IN ROAD ENGINEERING

(30) Priorité: 28.01.2010 FR 1050567
(43) Date de publication de la demande: 05.12.2012
(73) Titulaire: Eurovia SA, 92500 Rueil Malmaison (FR); Novance, 60200 Venette (FR)
(72) Inventeur: DELFOSSE, Frédéric, F-33600 Pessac (FR); CHATILLON, Matthieu, F-60200 Compiègne (FR); PRUD'HOMME, Daniel, F-60150 Chevincourt (FR)
(74) Mandataire: Regimbeau
(86) Numéro de dépôt international: PCT/EP2011/051219
(87) Numéro de publication internationale: WO 2011/092288

(56) Documents cités:
- EP-A2- 0 256 467
- WO-A1-2007/051302
- FR-A5- 2 134 926

## Description

L'invention concerne la formulation d'un liant synthétique à base d'une ou plusieurs résines contenant éventuellement un ou plusieurs plastifiants tous issus de ressources renouvelables, en particulier d'origine végétale.

De manière générale, on entend par matières issues de ressources renouvelables, des matières naturelles renouvelables dont le stock peut se reconstituer sur une période courte à l'échelle humaine. Il s'agit en particulier de matières premières d'origine animale ou d'origine végétale.

Ce liant peut être pigmenté et utilisé en génie civil en remplacement de liants bitumineux et/ou de liants de synthèse d'origine pétrochimique.

Les liants bitumineux sont notamment utilisés dans les domaines des chaussées, des matériaux de toitures, des revêtements, de l'étanchéité.

Une de leurs applications principales, les bétons bitumineux appelés également enrobés bitumineux, sont des mélanges comprenant un liant bitumineux et des granulats, qui sont utilisés de manière courante pour construire des couches de chaussée en construction routière ou pour des travaux d'étanchéité. Les couches de chaussées peuvent être des couches d'assises ou des couches de roulement.

Par couche de roulement, on entend ici la couche de surface d'une chaussée. L'homme du métier y reconnaîtra différentes formules d'enrobés bitumineux, généralement normalisées, tels que les Bétons Bitumineux Semi-Grenus, les Bétons Bitumineux Minces, les Bétons Bitumineux Très Minces, les Bétons Bitumineux Ultra Minces, les Enrobés Drainants, les Béton Bitumineux Aéronautiques, les Bétons Bitumineux Cloutables, les Bétons Bitumineux Souples, les Enrobés Coulés à Froid, les Coulis Bitumineux, les Enrobés Denses à Froid, les Enrobés Ouverts à Froid et les Bétons Bitumineux à Froid. On entend également les formules de couche de roulement utilisées dans d'autres pays et facilement reconnaissables par l'homme du métier, ainsi que les formules d'enrobés utilisées de manière provisoire comme couche de roulement, par exemple en attente de la mise en oeuvre d'une couche de roulement définitive.

Par granulats, on entend des granulats d'origines diverses, parmi lesquels les granulats issus de carrières ou de gravières, les produits de recyclage tels que les agrégats provenant du fraisage d'enrobés anciens, les rebuts de fabrication, les matériaux provenant du recyclage de matériaux de construction (bétons de démolition, etc.), les laitiers, les schistes, les granulats artificiels de toute origine et provenant par exemple de mâchefers d'incinération des ordures ménagères (MIOM), ainsi que leurs mélanges en toutes proportions. Des spécifications pour ces matériaux sont décrites dans la norme NF EN 13 043 portant sur les "Granulats pour mélanges hydrocarbonés et pour enduits superficiels utilisés dans la construction des chaussées, aérodromes et d'autres zones de circulation". Cette norme définit également les fines, également appelées fines minérales, poussières ou fillers, qui sont les particules minérales qui passent à travers un tamis à maille carrée de 63 µm. Un mélange granulaire typique pour béton bitumineux, contient des proportions variant environ entre 3 et 15 % en poids de fines, qui peuvent être celles naturellement présentes dans le granulat à l'issue de son procédé de fabrication, et/ou peuvent être ajoutées, provenant alors du même granulat ou d'un autre granulat. Il est ainsi courant d'ajouter des fines calcaires. De manière moins courante, il peut s'agir de fines d'autres provenances comme du ciment ou de la chaux.

Une autre application importante des liants bitumineux sont les enduits superficiels, tels que décrits dans le Guide Technique "Enduits Superficiels d'Usure" publié par le Service d'Études Techniques des Routes et Autoroutes (SETRA) et le Laboratoire Central des Ponts et Chaussées (LCPC) en mai 1995.

Ces liants bitumineux sont généralement des bitumes dits naturels, issus du pétrole brut, des schistes bitumineux, d'huiles lourdes, de sables bitumineux, etc., obtenus notamment par distillation et désasphaltage de la fraction lourde issue de la distillation.

Ils peuvent être utilisés tels quels ou être fluidifiés par un ou plusieurs fluxant(s) ou fluidifiant(s), issus par exemple de la carbochimie, de la pétrochimie ou d'origine végétale, ou encore être employés sous forme d'une émulsion ou d'une mousse.

Il est connu de l'homme du métier que de nombreux additifs peuvent être ajoutés à l'enrobé, à l'enduit ou au liant, tels que des agents de fluidification ou des agents émulsifiants, de manière à en réguler les propriétés. Par exemple, et de manière non limitative, il est possible d'ajouter des additifs tels que les zéolithes, les cires, les fibres naturelles ou synthétiques pour en ajuster la maniabilité, et/ou des agents favorisant l'adhésion du liant au granulat, et/ou des polymères (éventuellement de récupération tels que des déchets de câble, des poudrettes de caoutchouc, etc.) et/ou des additifs visant à réguler la rupture de l'émulsion, et/ou des additifs visant à réguler la formation de mousse.

Toutefois, de tels liants bitumineux présentent un inconvénient majeur lorsqu'ils sont utilisés en construction routière : leur couleur, invariablement noire, est difficilement modifiable.

Les revêtements colorés améliorent la sécurité des usagers de la route en identifiant clairement les voies spécifiques (voie piétonnes, pistes cyclables, voies de bus, etc.) et en matérialisant certaines zones de danger (entrées d'agglomération, virages dangereux, etc.).

Ils contribuent par ailleurs à l'amélioration du cadre de vie par le côté esthétique qu'ils apportent aux projets d'aménagement (esplanades, places etc.), les couleurs possibles étant limitées par les choix et quantités de pigments disponibles commercialement et leur rendu en présence des autres composants de l'enrobé, notamment les granulats.

Ils permettent également d'améliorer la visibilité en condition de faible luminosité, par exemple la nuit ou dans des sites particuliers comme les tunnels. Ils contribuent aussi à diminuer, dans les entrées de tunnel, le contraste visuel à l'entrée (effet "trou noir"), diminuant la gêne pour l'usager. De plus, ces revêtements clairs réfléchissent plus de lumière et permettent ainsi des baisses des dépenses d'éclairage pour un même niveau lumineux global.

Des revêtements plus réfléchissants permettent également de diminuer les températures en surface de revêtements, luttant ainsi efficacement contre les phénomènes d'orniérage consécutifs à une trop grande fluidification du liant suite à une forte augmentation de température. Des études réalisées sur le périphérique parisien rapportées par Y. Brosseaud et M. Saint-Jacques dans l'article "Bilan d'utilisation des revêtements bitumineux colorés en France" publiés dans les Comptes-Rendus du 3ème Congrès Eurasphalt & Eurobitume, Vienne (Autriche), 12-14 mai 2004, vol. 1, pp.43-53, notent une réduction de température de surface de 5°C pour un revêtement au liant clair comparé à un enrobé bitumineux classique, dans des conditions de températures extérieures estivales de 34°C.

La fabrication de revêtements colorés ne peut se faire avec des liants bitumineux classiques. Il existe des procédés, par exemple décrits dans le brevet US 2 195 536 afin de traiter chimiquement un liant bitumineux pour en diminuer la teneur en asphaltènes, qui sont les composés aromatiques polycondensés du bitume qui contribuent largement à lui donner sa couleur noire. Toutefois, cette voie ne permet pas de contrôler la couleur dans une large gamme et seuls des pigments rouges peuvent être utilisés, pour donner des enrobés systématiquement de couleur marron, voire bordeaux.

Des liants dits de synthèse, également appelés liants clairs ou pigmentables ou encore bitumes synthétiques, clairs ou pigmentables, ont alors été développés. Ils permettent de changer à loisir la couleur du liant. Pour cela, il faut donc pouvoir disposer d'une base claire, le liant de synthèse, de couleur blanche, voire jaune ou beige clair, à laquelle il est alors possible d'ajouter tout type de granulats et/ou de pigments de nature organique ou minérale, afin d'obtenir la couleur voulue. Ces liants éventuellement pigmentés peuvent alors être utilisés, en remplacement des liants bitumineux, dans toutes les applications de ces derniers, par exemple la construction routière.

Parmi les différentes compositions sous le terme liant de synthèse nous pouvons distinguer deux familles : les liants d'origine pétrochimique et les liants d'origine végétale.

Le brevet US 5,021,476 décrit un liant pour la réalisation d'un enrobé élastique qui consiste en un mélange de résine de tall oil, ou une résine de bois, une résine de térébenthine, un dérivé de ces résines ou un mélange des ces résines et une huile de traitement minérale ou végétale. Pour conférer des propriétés élastiques à ces liants afin d'obtenir une résistance à froid convenable, un polymère d'origine pétrochimique (élastomérique ou/et thermoplastique) est ajouté au liant.

Le brevet FR 2 853 647 décrit la composition d'un liant d'origine végétale qui présente des propriétés de viscoélasticité comparables à celles du bitume pour une large gamme de température, allant de -20°C à 70°C, permettant la réalisation de matériaux pour le bâtiment et/ou les travaux publics. Une telle composition comprend :
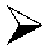 au moins une résine naturelle ou naturelle modifiée d'origine végétale ayant un point de ramollissement mesuré de 30°C à 200°C (ISO 4625),
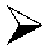 au moins une huile végétale ayant une viscosité à 25°C de 50 mPa.s à 1000 Pa.s.

En outre, il est important de bien noter qu'un tel liant est totalement exempt de tout élastomère naturel ou synthétique ou de tout autre polymère thermoplastique.

Les propriétés et proportions des ingrédients formant le liant de synthèse sont ajustées de manière à obtenir un liant qui présente au final des propriétés adhésives et mécaniques proches de celles des liants bitumineux usuels. En particulier, il est recherché des liants dont les propriétés répondent au mieux aux spécifications pour bitumes routiers, tels que décrites dans la norme NF EN 12591 "Spécifications des bitumes routiers".

Le brevet FR 2 915 204 décrit la composition d'un liant végétal constitué essentiellement de poix végétal, plus particulièrement de poix de tall-oil. De façon générale, un ou plusieurs additifs de réglage de caractéristiques physiques ou chimiques entrent également dans une telle composition. Il s'agit en particulier d'additifs permettant de régler la viscosité, parmi lesquels on relèvera des polymères, des colophanes ou dérivés de colophanes ainsi que des terpènes et dérivés de terpènes etc.

Le document EP0256467 divulgue des polyesters insaturés de poids moléculaire faible, préparés à partir d'acides gras insaturés de provenance végétale. Les matériaux de départ appropriés sont, par exemple, les huiles de soja, les graines de tournesol, les graines de lin, à condition que la teneur en doubles liaisons est suffisante pour garantir le nombre requis d'iode d'au moins 50. De plus, la réaction pour préparer les polyesters mentionnés ci-dessus est effectuée de telle sorte que le produit final a un indice d'acide entre 2 et 25 et un indice d'hydroxyle entre 10 et 60. Ces polyesters fluides ont des propriétés adhésives et sont adaptés comme liants pour des matériaux de construction tels que le béton.

La présente invention a pour but de formuler un liant essentiellement à base de matières issues de ressources renouvelables, en particulier d'origine végétale permettant d'obtenir des propriétés rhéologiques au moins équivalentes à un liant bitumineux et aux liants d'origine végétale décrits dans la littérature.

Cette formulation permet d'obtenir un liant synthétique essentiellement à base de matières issues de ressources renouvelables, en particulier d'origine végétale ayant toutes les qualités requises pour être employé en technique routière, en particulier les propriétés mécaniques et adhésives, mais aussi une bonne tenue au stockage, une amélioration de la résistance au vieillissement et les propriétés rhéologiques permettant d'améliorer la maniabilité des enrobés et par conséquence réduire les températures d'enrobage des enrobés à chaud. Cette réduction de température peut atteindre 40°C.

Pour atteindre de telles propriétés, il s'est avéré nécessaire de recourir à un polyester issu de ressources renouvelables satisfaisant des propriétés physicochimiques particulières. En l'occurrence, l'indice d'acide et l'indice d'hydroxyle doivent être ajustés de manière à obtenir un liant selon l'invention présentant une faible sensibilité à l'eau, en particulier au stade de ses applications. En l'occurrence, l'indice d'iode doit également être ajusté pour permettre de satisfaire les propriétés applicatives.

Le choix de la viscosité n'apparaît qu'en tant que caractéristique secondaire dans la mesure où elle peut être corrigée au stade des applications envisagées par ajout éventuel d'additifs tels que des polymères.

La présente invention concerne un liant synthétique comprenant :
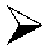 de 20 % à 100 % en poids d'au moins un polyester essentiellement à base de matières issues de ressources renouvelables, en particulier d'origine végétale présentant :
   - un indice d'hydroxyle inférieur à 100 mg KOH/g,
   - un indice d'acide inférieur à 25 mg KOH/g,
   - un indice d'iode inférieur à 100 g I₂/100g, et,
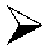 de 0 % à 80 % en poids d'au moins une résine naturelle ou modifiée issue de ressources renouvelables, en particulier d'origine végétale.

Selon une caractéristique avantageuse de l'invention, ledit liant synthétique comprend :
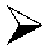 de 20 % à 100 % en poids d'au moins un polyester essentiellement à base de matières issues de ressources renouvelables, en particulier d'origine végétale présentant :
   - un indice d'hydroxyle inférieur à 25 mg KOH/g,
   - un indice d'acide inférieur à 5 mg KOH/g,
   - un indice d'iode inférieur à 40 g I₂/100g, et,
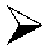 de 0 % à 80 % en poids d'au moins une résine naturelle ou modifiée issue de ressources renouvelables, en particulier d'origine végétale.

Selon une autre caractéristique de l'invention, le polyester végétal est obtenu par polycondensation d'un mélange d'huiles et/ou d'acides gras, de préférence saturés, et de polyacides avec des polyols.

Selon une autre caractéristique de l'invention, les acides gras ou huiles sont issus de ressources renouvelables d'origine végétale ou animale, saturés ou insaturés.

Par huile issue de ressources renouvelables, on entend les huiles, brutes ou raffinées, obtenues par trituration de graines, noyaux ou fruits de végétaux, en particulier les plantes oléagineuses, telles que, de manière non limitative, les huiles de lin, de colza, de tournesol, de soja, d'olive, de palme, de ricin, de bois, de maïs, de courge, de pépins de raisin, de jojoba, de sésame, de noix, de noisette, d'amande, de karité, de macadamia, de coton, de luzerne, de seigle, de carthame, d'arachide, de coprah, de tall et d'argan et/ou obtenues à partir des graisses animales en particulier l'huile ou graisse de suif. Plus particulièrement, les huiles seront sélectionnées parmi les huiles de colza, de tournesol, de soja, de palme, de coprah et de tall ainsi que le suif. Les acides gras sont choisis parmi :
▪ les acides gras insaturés conjugués choisis parmi l'acide linoléique, l'acide linolénique, les acides gras de tournesol, de lin, de soja, de ricin (déshydraté), les huiles de tung, d'oiticica, de soja, de tournesol, de carthame, d'olive, de palme, de lin et de ricin ;
▪ les acides gras insaturés non conjugués, les acides gras saturés, les monoacides gras choisis parmi les acides gras de ricin, de coco, de coton, de ricin déshydraté, de soja, de tall, les acides 2-éthyle hexanoïque, linoléique, linolénique, oléique, palmitique, caprylique, caprique, laurique, myristique, stéarique, isostéarique, arachidique, béhénique, pélargonique, rosine, les huiles de ricin, de coco, de coton, de ricin déshydraté, de soja et de tall ;
▪ les monoacides carboxyliques non gras, choisis parmi les acides benzoïques, butanoïque, p-tert-butyl benzoïque, caproïque, caprylique, caprique, propanoïque, pentanoïque, abiétique et crotonique.

Selon une autre caractéristique de l'invention, les polyacides d'origine végétale sont choisis parmi les polyacides carboxyliques ou anhydrides de fonctionnalité au moins égale à 2, en particulier parmi l'acide citrique, isophtalique, téréphtalique l'anhydride pyromellitique, les acides ou anhydrides adipique, azélaïque, fumarique, maléique, phtalique, succinique, sébacique, diglycolique, trimellitique, dimérisés, trimérisés et dodécandioïque.

Selon une autre caractéristique de l'invention, lesdits polyols d'origine végétale sont choisis parmi les polyols de fonctionnalité au moins égale à 2, en particulier parmi éthylène glycol, polyéthylène glycol (Mw variant de 300 à 6000), propylène glycol, 1,3-butylène diol, pentane diol, néopentyle glycol, hexane diol, diéthylène glycol, dipropylène glycol, triéthylène glycol, glycérol, triméthylol propane, triméthylol éthane, pentaérythritol, dipentaérythritol, sorbitol, méthyl glucoside et triméthylolpropane.

Comme déjà mentionné précédemment, la ou les résine(s) éventuellement présente(s) dans le liant synthétique selon l'invention sont également d'origine renouvelable.

Selon une caractéristique avantageuse de l'invention, les résines naturelles sont choisies parmi les colophanes naturelles brutes ou naturelles modifiées, les terpènes naturels ou les terpènes naturels modifiés.

Selon une autre caractéristique de l'invention, le liant synthétique contient un pigment coloré, de préférence de couleur claire (oxydes métalliques tels que des oxydes de Ti, Zn, Fe).

Selon une autre caractéristique de l'invention, le liant synthétique contient en outre un agent renforçant la tenue aux UV.

Selon une caractéristique additionnelle de l'invention, le liant synthétique contient en outre des agents structurants, des agents de renfort et/ou des agents modificateurs de rhéologie.

Selon une caractéristique avantageuse de l'invention, le liant synthétique est utilisé pour ses applications en technique routière.

Selon une autre caractéristique de l'invention, le liant synthétique est utilisé pour la réalisation de couches de roulement de chaussées, de zones aéroportuaires, de stations service, pour des revêtements pour trottoirs, parkings, esplanades, aménagements urbains.

Selon une caractéristique avantageuse de l'invention, le liant synthétique est utilisé sous la forme d'une émulsion aqueuse contenant de 5% à 95 % en poids dudit liant synthétique.

L'invention concerne également un enduit superficiel ou enrobé coulé à froid, réalisé à l'aide d'une émulsion de liant synthétique.

De manière surprenante, les demandeurs ont découvert que le polyester végétal spécifique objet de la présente invention, en mélange avec des agents structurants et/ou des renforts utilisés couramment dans la formulation des liants de synthèse, permettait d'obtenir un nouveau liant aux propriétés mécaniques contrôlées. Parmi ces agents structurants, la présente invention privilégiera les agents structurants d'origine renouvelable tels que les résines naturelles, naturelles modifiées, de préférence sans ajout de polymère pétrochimique. Toutefois, dans certaines conditions d'utilisation il peut s'avérer utile d'ajouter au liant selon l'invention des polymères, en particulier choisis parmi les copolymères styrène-butadiène, les copolymères styrène-isoprène, les copolymères éthylène-acétate de vinyle (EVA), les terpolymères, tel que par exemple le composé d'une chaîne éthylénique avec des groupements fonctionnels d'acrylate de butyle et de glycidyl acrylate de méthyle. Lorsque de tels polymères sont éventuellement ajoutés, ils sont présents à raison d'une concentration en masse inférieure à 10 %, de préférence inférieure à 5%.

Dans l'optique de ces applications particulières, les demandeurs privilégieront les acides gras saturés, les polyacides végétaux et les polyols végétaux pour rendre le polymère 100% renouvelable et satisfaire les propriétés applicatives en terme de :
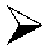 stabilité à la température :
   - lors du stockage du liant : 80 à 160 °C et préférentiellement 100 à 140°C ;
   - sur la chaussée : - 40°C à 70°C et préférentiellement entre 20°C et 50°C ;
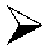 stabilité aux rayons UV ;
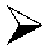 stabilité à l'eau.

Pour entrer utilement dans la formulation du liant selon l'invention, la résine ou les résines précédemment définies doivent avoir une température de ramollissement comprise entre 30 à 200°C, et préférentiellement entre 80 à 150°C.

Plus précisément, les demandeurs ont découvert qu'un mélange contenant de 20% à 100% et préférentiellement de 20 % à 80 % et préférentiellement de 40 % à 60%, de polyester végétal dans une résine adaptée, caractérisé par des essais dès fabrication et après des sollicitations (température, humidité, UV) :
- température de ramollissement (NF EN 1427) ;
- pénétrabilité à 25°C (NF EN 1426) ;
- viscosité en fonction de la température ;
permettait d'obtenir un liant d'origine renouvelable aux propriétés applicatives entièrement satisfaisantes.

L'invention peut être employée avantageusement en mélange avec des granulats pour toute application en technique routière, en particulier pour l'exécution de couches de roulement de chaussées ou de revêtements pour trottoirs, parkings, esplanades etc.

Comme déjà indiqué précédemment, un pigment pourra être ajouté à l'enrobé pour modifier sa coloration. Par pigment, on entend toute substance organique ou minérale apportant une couleur, ainsi que leurs mélanges en toutes proportions.

Selon une application préférentielle de l'invention, le liant est utilisé pour faire une couche de roulement à visibilité améliorée par exemple pour la conduite nocturne ou les tunnels.

Selon une application préférentielle de l'invention, le liant est utilisé pour faire une couche de roulement de couleur contrôlée permettant par exemple de mettre en valeur une zone particulière de la chaussée (voie de bus, piste cyclable, etc.) ou encore de réaliser des effets esthétiques mettant en valeur un aménagement urbain, place, esplanade, etc.

Selon une application préférentielle de l'invention, le liant synthétique est résistant aux carburants grâce à l'emploi d'huiles issues de ressources renouvelables, et est utilisé dans des couches de roulement pour zones aéroportuaires ou stations-services ou encore toute zone de stationnement ou de transit où la résistance au carburant permet d'améliorer la durée de vie de la chaussée.

Le liant synthétique selon l'invention peut également être mis en émulsion à l'aide des moyens classiques utilisés pour l'émulsification des bitumes, par exemple le moulin colloïdal, le mélangeur statique ou les procédés par inversion de phase en régime laminaire. La mise en émulsion peut se faire à l'aide de tout émulsifiant ou mélange d'émulsifiants, choisi par exemple parmi les émulsifiants cationiques, anioniques, amphotères ou non-ioniques.

Selon une application préférentielle de l'invention, le liant synthétique émulsifié est utilisé dans une application pour couche de roulement telles qu'un enduit superficiel ou un enrobé coulé à froid.

Selon une application préférentielle de l'invention, le liant synthétique mis en émulsion est résistant aux carburants par exemple grâce à l'emploi d'huile végétale, et est utilisé dans des couches de roulement telles qu'un enduit superficiel ou un enrobé coulé à froid pour zones aéroportuaires ou stations-services ou encore toute zone de stationnement ou de transit où la résistance au carburant permet d'améliorer la durée de vie de la chaussée.

Le liant synthétique selon l'invention peut être également mélangée avec un fluxant végétal siccatif pour la réalisation d'un liant synthétique d'origine végétale pour la formulation d'enduit superficiel et d'enrobé à froid. Un catalyseur d'oxydation pourra être ajouté pour cette application afin de favoriser la cinétique de montée en cohésion du liant synthétique. Par catalyseur d'oxydation, on entend tout composé capable d'accélérer la réaction de siccativation de l'huile siccativante. Il s'agit par exemple des sels métalliques, notamment des sels organiques de cobalt, de manganèse et de zirconium.

Pour la réalisation de revêtements spécifiques (trafics importants, zone de cisaillement, etc.) de 0% à 3% en poids d'agents de renforts, par exemple polymérique d'origine végétale ou pétrolière pourront être ajoutés à la composition de revêtement.

### Exemple 1 : Fabrications et analyses de polymères d'origine végétale

### Fabrication PV1 :

Procédé de production de polymère végétal témoin aux propriétés physicochimiques non satisfaisantes : Indice d'hydroxyle 40-60 mg KOH/g, viscosité > 25 dPa.s, indice d'acide > 5 mg KOH/g :

Pour 100 parties de polyester végétal, sont mélangées 47 parties d'huile de palme, 0,05 partie de lithine et 6,5 à 7 parties de glycérol qui sont chauffées à 200-220°C pendant 1 heure. Après l'ajout 47 à 48 parties d'acides gras dimérisés, la température est maintenue à 220°C. L'indice d'acide et la viscosité sont suivis toutes les heures. Une fois que l'indice d'acide atteint 20 mg KOH/g, la pression est réduite progressivement jusqu'à atteindre 100 mBar. La réaction stagne ensuite autour de 8-10 mg KOH/g et est arrêtée.

### Résultats :

- Indice d'acide : 7 - 12 mg KOH/g (ISO 660)
- Indice d'hydroxyle : 40 - 60 mg KOH/g (ISO 4629)
- Indice d'iode : 55 - 70 g I₂/100g (ISO 3961)
- Viscosité à 25°C : 30 - 45 dPa.s
- Couleur Gardner : 8

### Fabrication PV 2 :

Procédé de production de polymère végétal aux propriétés physico-chimiques satisfaisantes : indice d'hydroxyle < 25 mg KOH/g ; Indice d'acide < 5 mg KOH/g, viscosité > 25 dPa.s :

Pour 100 parties de polyester végétal, sont mélangées 54 à 55 parties d'acide stéarique, 10,5 à 11 parties de glycérol et 39,5 parties d'acides gras dimérisés. Le mélange est ensuite chauffé progressivement à 190 - 220°C tout en favorisant l'élimination de l'eau coproduite. L'indice d'acide et la viscosité sont suivis toutes les heures. Une fois que l'indice d'acide atteint 15 mg KOH/g, la pression est réduite progressivement jusqu'à atteindre 100 mbar. La réaction est ensuite arrêtée lorsque l'indice d'acide atteint 5 mg KOH/g.

### Résultats :

- Indice d'acide : 3 - 5 mg KOH/g (ISO 660)
- Indice d'hydroxyle : 20 - 24 mg KOH/g (ISO 4629)
- Indice d'iode : 30 - 40 g I₂/100g (ISO 3961)
- Viscosité à 25°C : 30 - 50 dPa.s
- Couleur Gardner : 7

### Exemple 2 : Fabrication de liants selon l'invention et analyses

| Nom des liants | LV1 | LV2 |
|---|---|---|
| Polymère d'origine végétale | | |
| Nom | PV1 | PV2 |
| Teneur | 40 | 42 |
| Résine | | |
| Nom | Dertopoline G* | |
| Fournisseur | DRT | DRT |
| Teneur | 60 | 58 |

| | | |
|---|---|---|
| * Colophane polymérisée et estérifiée à la glycérine à bas indice d'acide | | |

### Conditions de mélange :

Le polymère végétal et la résine ont été mélangés à 130 °C pendant 1 heure.

**Caractéristiques des liants :**

| | | | Nom du liant | | |
|---|---|---|---|---|---|
| Essais | Norme | Unité | LV1 | LV2 | Bitume grade 50/70 |
| Pénétrabilité | NF EN 1426 | 1/10 mm | 89 | 92 | 70 |
| Température Bille et Anneau | NF EN 1427 | °C | 43,5 | 45,2 | 43,8 |
| Evolution des propriétés après 14j à 150°C(1) | | | | | |
| Pénétrabilité | NF EN 1426 | 1/10 mm | 81 | 90 | 68 |
| Température Bille et Anneau | NF EN 1427 | °C | 46,2 | 45,1 | 43,6 |
| Stabilité du liant à l'eau du liant en film mince (2) | - | - | | | |
| 3 jours | | | Apparition d'un film blanc* | transparent | - |
| 7 jours | | | | transparent | - |

| | | | | | |
|---|---|---|---|---|---|
| * traduisant une compatibilité du liant avec l'eau qui peut ainsi y pénétrer trop facilement et influencer négativement les propriétés applicatives dudit liant. (1) 1 kg de liant est mis dans un pot métallique fermé d'une contenance de 2 kg pendant 14 j à 150 °C (2) du liant est placé en film mince dans une coupelle à chaud. Après refroidissement, de l'eau est mis sur le film de liant et l'ensemble est mis dans une étuve à 50°C. A divers instant, le technicien relève l'aspect de surface du liant. | | | | | |

### Exemple 3 : Fabrication et analyses d'enrobés selon l'invention

### 3-1 Enrobés à base de granulats silico- calcaires :

| | |
|---|---|
| 2/6 Silico-calcaire | 50 % |
| 0/2 Silico-calcaire | 49 % |
| Filler Meac | 1 % |
| Teneur en liant : | 6,3 ppc |

Les granulats sont chauffés à 130 °C et malaxés. Le liant végétal chauffé est ajouté à 130 °C. L'enrobé est malaxé 3 minutes dans un malaxeur classique de laboratoire

| | Liant | LV1 | LV2 | Spécifications |
|---|---|---|---|---|
| Essais Duriez (NF 12697-12/procédure B) | Cw(kPa) | 6020 | 7150 | |
| | Cd(kPa) | 8750 | 8900 | |
| | Cw/Cd | 69 | 80 | > 70 |

### 3-2 Enrobés à base de granulats dioritiques :

| | |
|---|---|
| 6/10 diorite | 71 % |
| 0/2 diorite | 26 % |
| Filler Meac | 3 % |
| Teneur en liant : | 5,7 ppc |

| | Liant | LV1 | LV2 | Spécifications |
|---|---|---|---|---|
| Essais Duriez (NF 12697-12/procédure B) | Cw(kPa) | 6070 | 6820 | |
| | Cd(kPa) | 8200 | 8320 | |
| | Cw/Cd | 74 | 82 | > 70 |

### Exemple 4 : Evaluation des performances après vieillissement

Afin d'évaluer l'évolution des performances des liants d'origine végétale des essais de traction en fonction du temps de mûrissement à 50 °C ont été effectués.

La vitesse de traction est fixée à 2 mm/min

Deux enrobés sont ainsi comparés. Ces deux enrobés diffèrent par le liant utilisé. La formule de l'enrobé est la suivante :

| | |
|---|---|
| 2/6 Silico-calcaire | 50 % |
| 0/2 Silico-calcaire | 49 % |
| Filler Meac | 1 % |
| Teneur en liant : | 6,3 ppc |

Les liants utilisés sont :
- Liant d'origine végétale selon l'art antérieur : Dertoline MG (77 %) + Huile de lin (23 %) : (Liant art antérieur)
- Liant selon l'invention

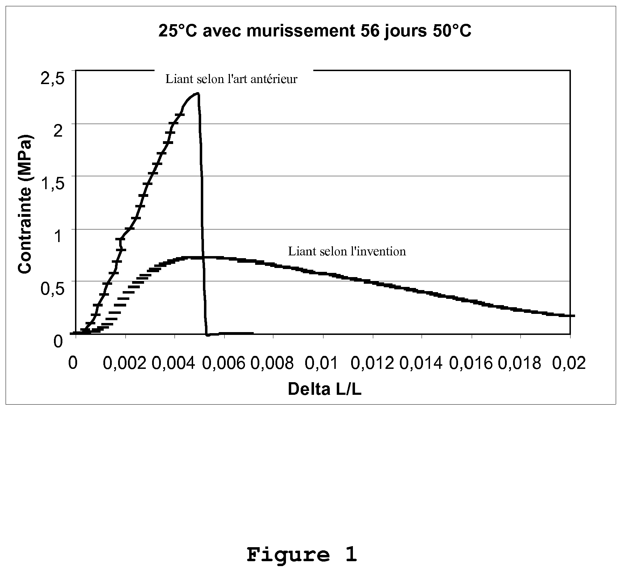

La figure 1 en annexe représente les propriétés en traction, mesurée à 25°C, après 56 jours de mûrissement à 50 °C.

Ces résultats montrent l'impact de la formulation du liant végétal sur l'évolution des propriétés de ductilité de l'enrobé dans le temps.

## Revendications

1. Utilisation d'un liant synthétique comprenant :
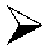 de 20 % à 100 % en poids d'au moins un polyester à base de matières issues de ressources renouvelables, en particulier d'origine végétale présentant :
- un indice d'hydroxyle inférieur à 25 mg KOH/g,
- un indice d'acide inférieur à 5 mg KOH/g,
- un indice d'iode inférieur à 40 g I₂/100g,
et,
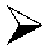 de 0 % à 80 % en poids d'au moins une résine naturelle ou modifiée issue de ressources renouvelables, en particulier d'origine végétale,
pour ses applications en technique routière.

2. Utilisation selon la revendication 1, **caractérisée en ce que** ledit liant comprend :
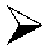 de 40 % à 60 % en poids d'au moins un polyester végétal, et,
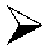 de 60 % à 40 % en poids d'au moins une résine naturelle ou modifiée issue de ressources renouvelables, en particulier d'origine végétale.

3. Utilisation selon l'une des revendications 1 à 2, **caractérisée en ce que** le polyester végétal est obtenu par polycondensation d'un mélange d'acides gras, de préférence saturés, et de polyacides avec des polyols.

4. Utilisation selon la revendication 3, **caractérisée en ce que** lesdites huiles sont issues de ressources renouvelables d'origine végétale ou animale, saturées ou insaturées, en particulier obtenues par trituration de graines, noyaux ou fruits de végétaux, en particulier les plantes oléagineuses, telles que, de manière non limitative, les huiles de lin, de colza, de tournesol, de soja, d'olive, de palme, de ricin, de bois, de maïs, de courge, de pépins de raisin, de jojoba, de sésame, de noix, de noisette, d'amande, de karité, de macadamia, de coton, de luzerne, de seigle, de carthame, d'arachide, de coprah, de tall et d'argan ou à partir des graisses animales choisies parmi la graisse de suif.

5. Utilisation selon la revendication 3, **caractérisée en ce que** les acides gras sont choisis parmi :
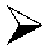 les acides gras insaturés conjugués choisis parmi l'acide linoléique, l'acide linolénique, les acides gras de tournesol, de lin, de soja, de ricin (déshydraté), les huiles de tung, d'oiticica, de soja, de tournesol, de carthame, d'olive, de palme, de lin et de ricin ;
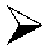 les acides gras insaturés non conjugués, les acides gras saturés, les monoacides gras choisis parmi les acides gras de ricin, de coco, de coton, de ricin déshydraté, de soja, de tall, les acides 2-éthyle hexanoïque, linoléique, linolénique, oléique, palmitique, caprylique, caprique, laurique, myristique, stéarique, isostéarique, arachidique, béhénique, pélargonique, rosine, les huiles de ricin, de coco, de coton, de ricin déshydraté, de soja et de tall ;
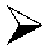 les monoacides carboxyliques non gras, choisis parmi les acides benzoïques, butanoïque, p-tert-butyl benzoïque, caproïque, caprylique, caprique, propanoïque, pentanoïque, abiétique et crotonique.

6. Utilisation selon la revendication 3, **caractérisée en ce que** les acides gras proviennent d'huiles animales et/ou végétales, en particulier du suif et/ou de plantes oléagineuses telles les huiles de colza, de tournesol, de soja, de palme de tall.

7. Utilisation selon la revendication 3, **caractérisée en ce que** les polyacides sont choisis parmi les polyacides carboxyliques ou anhydrides de fonctionnalité au moins égale à 2, en particulier parmi l'acide citrique, isophtalique, téréphtalique l'anhydride pyromellitique, les acides ou anhydrides adipique, azélaïque, fumarique, maléique, phtalique, succinique, sébacique, diglycolique, trimellitique, dimérisés, trimérisés et dodécandioïque.

8. Utilisation selon la revendication 3, **caractérisée en ce que** lesdits polyols sont choisis parmi les polyols de fonctionnalité au moins égale à 2, en particulier parmi éthylène glycol, polyéthylène glycol (Mw variant de 300 à 6000), propylène glycol, 1,3-butylène diol, pentane diol, néopentyle glycol, hexane diol, diéthylène glycol, dipropylène glycol, triéthylène glycol, glycérol, triméthylol propane, triméthylol éthane, pentaérythritol, dipentaérythritol, sorbitol, méthyl glucoside et triméthylolpropane.

9. Utilisation selon l'une des revendications précédentes, **caractérisée en ce que** la ou les résine(s) naturelle(s) présente(nt) une température de ramollissement comprise entre 30°C et 200°C, de préférence entre 80°C et 150°C, tel que mesuré selon la norme NF EN 1427.

10. Utilisation selon l'une des revendications précédentes, **caractérisée en ce que** les résines naturelles sont choisies parmi les colophanes naturelles brutes ou naturelles modifiées, les terpènes naturels ou les terpènes naturels modifiés.

11. Utilisation selon l'une des revendications précédentes, **caractérisée en ce que** ledit liant contient un pigment coloré, de préférence de couleur claire (oxydes métalliques tels que des oxydes de Ti, Zn, Fe).

12. Utilisation selon l'une des revendications précédentes, **caractérisée en ce que** ledit liant contient en outre un agent renforçant la tenue aux UV.

13. Utilisation selon l'une des revendications précédentes, **caractérisée en ce que** ledit liant contient en outre des agents structurants, des agents de renforts et/ou des agents modificateurs de rhéologie.

14. Utilisation selon la revendication 13, **caractérisée en ce que** ledit liant contient en outre jusqu'à 10 %, de préférence jusqu'à 5%, en masse d'un polymère choisi parmi les copolymères styrène-butadiène, les copolymères styrène-isoprène, les copolymères éthylène-acétate de vinyle (EVA), les terpolymères, tel que par exemple le composé d'une chaîne éthylénique avec des groupements fonctionnels d'acrylate de butyle et de glycidyl acrylate de méthyle.

15. Utilisation selon l'une des revendications 1 à 14, pour la réalisation de couches de roulement de chaussées, de zones aéroportuaires, de stations service, pour des revêtements pour trottoirs, parkings, esplanades, aménagements urbains.

16. Utilisation selon l'une des revendications 1 à 15, sous la forme d'une émulsion aqueuse contenant de 5% à 95 % en poids dudit liant synthétique.

17. Enduit superficiel ou enrobé coulé à froid, **caractérisé en ce qu'**il est réalisé à l'aide d'une émulsion aqueuse de liant synthétique selon la revendication 16.

## Patentansprüche

1. Verwendung eines synthetischen Bindemittels, umfassend:
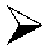 20 Gew.-% bis 100 Gew.-% mindestens eines Polyesters auf Basis von Stoffen, die aus nachwachsenden Rohstoffen, insbesondere pflanzlichen Ursprungs, hergestellt sind, mit:
- einer Hydroxylzahl kleiner als 25 mg KOH/g,
- einer Säurezahl kleiner als 5 mg KOH/g,
- einer Iodzahl kleiner als 40 g I₂/100g,
und
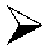 0 Gew.-% bis 80 Gew.-% mindestens eines natürlichen oder modifizierten Harzes, das aus nachwachsenden Rohstoffen, insbesondere pflanzlichen Ursprungs, hergestellt ist,
für Anwendungen im Straßenbau.

2. Verwendung nach Anspruch 1, **dadurch gekennzeichnet, dass** das Bindemittel Folgendes umfasst:
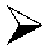 40 Gew.-% bis 60 Gew.-% mindestens eines pflanzlichen Polyesters und
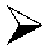 60 Gew.-% bis 40 Gew.-% mindestens eines natürlichen oder modifizierten Harzes, das aus nachwachsenden Rohstoffen, insbesondere pflanzlichen Ursprungs, hergestellt ist.

3. Verwendung nach einem der Ansprüche 1 bis 2, **dadurch gekennzeichnet, dass** der pflanzliche Polyester durch Polykondensation eines Gemischs aus Fettsäuren, vorzugsweise gesättigten Fettsäuren, und Polysäuren mit Polyolen erhalten wird.

4. Verwendung nach Anspruch 3, **dadurch gekennzeichnet, dass** die Öle aus nachwachsenden Rohstoffen pflanzlichen oder tierischen Ursprungs hergestellt sind, gesättigt oder ungesättigt sind, insbesondere durch Zerreiben von Samenkörnern, Nüssen oder Früchten von Pflanzen, insbesondere Ölpflanzen, wie etwa, nicht einschränkend, Lein-, Raps-, Sonnenblumen-, Soja-, Oliven-, Palm-, Rizinus-, Holz-, Mais-, Kürbiskern-, Traubenkern-, Jojoba-, Sesam-, Walnuss-, Haselnuss-, Mandel-, Shea-, Macadamia-, Baumwollsaat-, Luzernen-, Roggen-, Saflor-, Erdnuss-, Kopra-, Tall- und Arganöl, oder aus tierischen Fetten erhalten werden, die aus Talgfett ausgewählt sind.

5. Verwendung nach Anspruch 3, **dadurch gekennzeichnet, dass** die Fettsäuren ausgewählt sind aus:
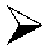 konjugierten ungesättigten Fettsäuren, ausgewählt aus Linolsäure, Linolensäure, Sonnenblumen-, Leinsamen-, Soja-, Rizinus-(dehydriert) Fettsäuren, Tung-, Oiticica-, Soja-, Sonnenblumen-, Saflor-, Oliven-, Palm-, Lein- und Rizinusöl;
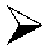 nicht-konjugierten ungesättigten Fettsäuren, gesättigten Fettsäuren, Monofettsäuren, ausgewählt aus Rizinusöl-, Kokosöl-, Baumwollsaatöl-, Rizinus- (dehydriert), Sojaöl-, Tallöl-Fettsäuren, 2-Ethylhexan-, Linol-, Linolen-, Olein-, Palmitin-, Capryl-, Caprin-, Laurin-, Myristin-, Stearin-, Isostearin-, Arachin-, Behen-, Pelargon-, Harzsäure, Rizinus-, Kokos-, Baumwollsaatöl, dehydriertem Rizinusöl, Soja- und Tallöl;
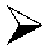 von Fettsäuren verschiedenen Monocarbonsäuren, ausgewählt aus Benzoe-, Butan-, p-tert-Butylbenzoe-, Capron-, Capryl-, Caprin-, Propion-, Baldrian-, Abietin- und Crotonsäure.

6. Verwendung nach Anspruch 3, **dadurch gekennzeichnet, dass** die Fettsäuren aus tierischen und/oder pflanzlichen Ölen entstehen, insbesondere aus Talg und/oder Ölpflanzen, wie etwa Raps-, Sonnenblumen-, Soja-, Palm-, Tallöl.

7. Verwendung nach Anspruch 3, **dadurch gekennzeichnet, dass** die Polysäuren ausgewählt sind aus Polycarbonsäuren oder Anhydriden mit einer Funktionalität von mindestens gleich 2, insbesondere aus Citronensäure, Isophthalsäure, Terephthalsäure, Pyromellitsäureanhydrid, Adipin-, Azelain-, Fumar-, Malein-, Phthal-, Bernstein-, Sebacin-, Diglykol-, Trimellit-, Dimer-, Trimer- und Dodecandisäure oder - säureanhydrid.

8. Verwendung nach Anspruch 3, **dadurch gekennzeichnet, dass** die Polyole ausgewählt sind aus Polyolen mit einer Funktionalität von mindestens gleich 2, insbesondere aus Ethylenglycol, Polyethylenglycol (Molekülmasse zwischen 300 und 6000 schwankend), Propylenglycol, 1,3-Butylendiol, Pentandiol, Neopentylglycol, Hexandiol, Diethylenglycol, Dipropylenglycol, Triethylenglycol, Glycerol, Trimethylolpropan, Trimethylolethan, Pentaerythritol, Dipentaerythritol, Sorbitol, Methylglucosid und Trimethylolpropan.

9. Verwendung nach einem der vorhergehenden Ansprüche, **dadurch gekennzeichnet, dass** das oder die natürliche(n) Harz(e) einen Erweichungspunkt zwischen 30°C und 200°C, vorzugsweise zwischen 80°C und 150°C, gemessen nach der Norm NF EN 1427, aufweist (aufweisen).

10. Verwendung nach einem der vorhergehenden Ansprüche, **dadurch gekennzeichnet, dass** die natürlichen Harze ausgewählt sind aus unbehandelten natürlichen oder modifizierten natürlichen Kolophoniumharzen, natürlichen Terpenen oder modifizierten natürlichen Terpenen.

11. Verwendung nach einem der vorhergehenden Ansprüche, **dadurch gekennzeichnet, dass** das Bindemittel ein Farbpigment enthält, vorzugsweise von heller Farbe (Metalloxide wie etwa Oxide von Ti, Zn, Fe).

12. Verwendung nach einem der vorhergehenden Ansprüche, **dadurch gekennzeichnet, dass** das Bindemittel außerdem ein Mittel enthält, dass die UV-Beständigkeit verbessert.

13. Verwendung nach einem der vorhergehenden Ansprüche, **dadurch gekennzeichnet, dass** das Bindemittel außerdem Konsistenzgeber, Verfestigungsmittel und/oder Rheologie-Modifizierungsmittel enthält.

14. Verwendung nach Anspruch 13, **dadurch gekennzeichnet, dass** das Bindemittel außerdem bis 10 Ma%, vorzugsweise bis 5 Ma%, eines Polymers enthält, das ausgewählt ist aus Styrol-Butadien-Copolymeren, Styrol-Isopren-Copolymeren, Ethylen- Vinylacetat- (EVA) Copolymeren, Terpolymeren wie beispielsweise der Verbindung einer Ethylenkette mit Butylacrylat- und Glycidylmethacrylat-Gruppen.

15. Verwendung nach einem der Ansprüche 1 bis 14 zur Realisierung von Fahrbahndeckschichten für Straßen, Flughafenbereiche, Tankstellen, für Beläge für Gehwege, Parkplätze, Esplanaden, städtebauliche Gestaltungen.

16. Verwendung nach einem der Ansprüche 1 bis 15 in Form einer wässrigen Emulsion, die 5 Gew.-% bis 95 Gew.-% des synthetischen Bindemittels enthält.

17. Oberflächenschicht oder kalt gegossene Fahrbahndecke, **dadurch gekennzeichnet, dass** sie mit Hilfe einer wässrigen Emulsion des synthetischen Bindemittels nach Anspruch 16 realisiert wird.

## Claims

1. Use of a synthetic binder comprising:
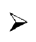 20% to 100% by weight of at least one polyester based on materials issuing from renewable resources, in particular of plant origin, having:
- a hydroxyl number of less than 25 mg KOH/g,
- an acid number of less than 5 mg KOH/g,
- an iodine number of less than 40 g I₂/100g,
and
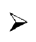 0% to 80% by weight of at least one natural or modified resin issuing from renewable sources, in particular of plant origin,
for applications thereof in road technology.

2. Use according to claim 1, **characterised in that** said binder comprises:
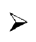 40% to 60% by weight of at least one plant polyester, and
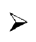 60% to 40% by weight of at least one natural or modified resin issuing from renewable resources, in particular of plant origin.

3. Use according to one of claims 1 to 2, **characterised in that** the plant polyester is obtained by polycondensation of a mixture of fatty acids, preferably saturated, and polyacids with polyols.

4. Use according to claim 3, **characterised in that** said oils issue from renewable resources of plant or animal origin, saturated or unsaturated, in particular obtained by trituration of plant seeds, nuts or fruits, in particular oleaginous plants, such as, non-limitatively, linseed, rapeseed, sunflower, soya, olive, palm, ricin, wood, maize, squash, grapeseed, jojoba, sesame, walnut, hazelnut, almond, shea, macadamia, cotton, alfalfa, rye, safflower, groundnut, copra, tall and argan oils or from animal fats chosen from suet.

5. Use according to claim 3, **characterised in that** the fatty acids are chosen from:
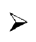 conjugated unsaturated fatty acids chosen from linoleic acid, linolenic acid, and sunflower, linseed, soya and ricin (dehydrated) fatty acids, and tung, oiticica, soya, sunflower, safflower, olive, palm, linseed and ricin oils;
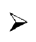 non-conjugated unsaturated fatty acids, saturated fatty acids, fatty monoacids chosen from ricin, coconut, cotton, dehydrated ricin, soya and tall fatty acids, 2-ethyl hexanoic, linoleic, linolenic, oleic, palmitic, caprilitic, capric, lauric, myristic, stearic, isostearic, arachidic, behenic, pelargonic and rosin acids, and ricin, coconut, cotton, dehydrated ricin, soya and tall oils;
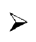 non-fatty carboxylic monoacids, chosen from benzoic, butanoic, p-tert-butyl benzoic, caproic, caprylic, capric, propanoic, pentanoic, abietic and crotonic acids.

6. Use according to claim 3, **characterised in that** the fatty acids come from animal and/or plant oils, in particular suet, and/or oleaginous plants such as rapeseed, sunflower, soya, tall palm oils.

7. Use according to claim 3, **characterised in that** the polyacids are chosen from carboxylic polyacids or anhydrides with a functionality of at least 2, in particular from citric, isophthalic or terephthalic acids or pyromellitic anhydride, or adipic, azelaic, fumaric, maleic, phthalic, succinic, sebacic, diglycolic or trimellitic acids or anhydrides, dimerised, trimerised and dodecanoic.

8. Use according to claim 3, **characterised in that** said polyols are chosen from polyols with a functionality of at least 2, in particular from ethylene glycol, polyethylene glycol (Mw varying from 300 to 6000), propylene glycol, 1,3-butylene diol, pentane diol, neopentyl glycol, hexane diol, diethylene glycol, dipropylene glycol, triethylene glycol, glycerol, trimethylol propane, trimethylol ethane, pentaerythritol, dipentaerythritol, sorbitol, methyl glucoside and trimethylolpropane.

9. Use according to one of the preceding claims, **characterised in that** the natural resin or resins have a softening temperature of between 30°C and 200°C, preferably between 80°C and 150°C, as measured in accordance with NF EN 1427.

10. Use according to one of the preceding claims, **characterised in that** the natural resins are chosen from untreated natural or modified natural colophanes, natural terpenes or modified natural terpenes.

11. Use according to one of the preceding claims, **characterised in that** said binder contains a colour pigment, preferably with a light colour (metal oxides such as Ti, Zn or Fe oxides).

12. Use according to one of the preceding claims, **characterised in that** said binder also contains an agent reinforcing resistance to UV.

13. Use according to one of the preceding claims, **characterised in that** said binder also comprises structuring agents, reinforcing agents and/or rheology modifying agents.

14. Use according to claim 13, **characterised in that** said binder also comprises up to 10%, preferably up to 5%, by mass of a polymer chosen from styrene-butadiene copolymers, styrene-isoprene copolymers, ethylene-vinyl acetate (EVA) copolymers and terpolymers, such as for example the compound of an ethylenic chain with functional groups of butyl acrylate and glycidyl methacrylate.

15. Use according to one of claims 1 to 14, for producing roadway running surfaces, airport areas and service stations, and for coatings for pavements, car parks, esplanades and urban spaces.

16. Use according to one of claims 1 to 15, in the form of an aqueous emulsion containing 5% to 95% by weight of said synthetic binder.

17. Surface finish or coating poured cold, **characterised in that** it is produced by means of an aqueous emulsion of synthetic binder according to claim 16.
